# EUROPÄISCHE PATENTANMELDUNG

(11) **EP 2 665 157 A2**
(43) Veröffentlichungstag der Anmeldung: **20.11.2013**
(21) Anmeldenummer: 13000654.7
(22) Anmeldetag: 08.02.2013
(51) Int. Cl.: H02K 1/28

(54) **Rotor eines Synchronmotors**

(30) Priorität: 19.05.2012 DE 102012009964
(71) Anmelder: WILO AG, 44263 Dortmund (DE)
(72) Erfinder: Berger, Christian, 52064 Aachen (DE); Weber, Hermann, 58313 Herdecke (DE)
(74) Vertreter: Cohausz Hannig Borkowski Wißgott

(57) **Zusammenfassung**

Die Erfindung betrifft einen Rotor eines Synchronmotors mit einem auf einer Keramikwelle zwischen zwei ringförmigen Hülsendeckeln befestigtem Permanentmagnet, wobei auf der Keramikwelle mindestens eine koaxiale Trägerhülse aufliegt, die mit ihrer Innenfläche auf der Außenseite der Keramikwelle angelötet ist, und dass auf der Außenfläche der Trägerhülse(n) die Hülsendeckel aufgeschweißt sind.

## Beschreibung

Die Erfindung betrifft einen Rotor eines Synchronmotors mit einem auf einer Keramikwelle zwischen zwei ringförmigen Hülsendeckeln befestigtem Permanentmagnet.

Es ist bekannt, die Hülsendeckel des Rotors eines Synchronmotors aus dünnem Edelstahlblech herzustellen und auf der Keramikwelle zu befestigen. Aufgrund der unterschiedlichen Materialen (Stahl/Keramik) ist ein Verschweißen nachteilig. Um eine schweißtechnische Fügeverbindung zu realisieren, müssen beide Materialien schmelzmetallurgisch verbunden werden, d. h. die Schmelztemperatur beider Materialien muss überschritten werden, was bei Edelstahl ca. 1400°C und Al₂O₃ ca. 2100°C der Fall ist. Bedingt durch signifikant unterschiedliche Wärmeausdehnungskoeffizienten beider Materialien entstehen bei der Abkühlung aus der Schmelze innere Spannungen, die zwangsläufig zu Rissen führen können.

Das Löten der Kapselung auf der Keramikwelle führt auch zu Problemen. Da das Magnetmaterial sehr temperaturempfindlich ist, ist ein Montieren der Teile auf der Keramikwelle mit anschließender Lötung im Vakuumofen nicht möglich.

Aufgabe der Erfindung ist es, bei einem Rotor der eingangs genannten Art eine sichere und konstruktiv einfache Befestigung der Hülsen an der Keramikwelle zu schaffen.

Diese Aufgabe wird erfindungsgemäß dadurch gelöst, dass auf der Keramikwelle mindestens eine koaxiale Trägerhülse aufliegt, die mit ihrer Innenfläche auf der Außenseite der Keramikwelle angelötet ist, und dass auf der Außenfläche der Trägerhülse(n) die Hülsendeckel aufgeschweißt sind.

Die Fügetechnologie Hochtemperaturvakuumlöten ist eine vorteilhafte Alternative, da das Verfahren hochfeste stoffschlüssige Verbindungen über Diffusionsprozesse erzielt. Um eine derartige Verbindung zu erzielen, wird ein Zusatzwerkstoff (Lot) aufgebracht, welcher eine Schmelztemperatur aufweist, die unterhalb der beiden anderen Fügewerkstoffe liegt. Dieser Zusatzwerkstoff liegt als Feststoff oder Paste vor und wird an den Fügestellen aufgetragen. Durch Erwärmung der mit Lot benetzten Fügepartner in einem Vakuumofen wird das Lot aufgeschmolzen. Das flüssige Lot wird durch den Kapillareffekt in die Fügespalte bzw. zwischen den Kontaktflächen der Fügepartner gezogen. Aus konstruktiver Sicht ist ein Spaltmaß zwischen den Kontaktflächen von ca. 0,2 mm sicher zu stellen, um den Kapillareffekt zu ermöglichen.

Aufgrund der Tatsache, dass das Magnetmaterial sehr temperaturempfindlich ist, ist ein Montieren der Teile auf der Keramikwelle mit anschließender Lötung im Vakuumofen nicht möglich. Aus diesem Grund wird eine Trägerhülse auf die Keramikwelle gelötet, auf welcher in einem anschließenden Schritt das Rotorpaket mit vorderem und hinterem Deckel lasergeschweißt wird.

Vorzugsweise sind die Trägerhülse(n) durch Hochtemperatur-Vakuumlöten auf der Keramikwelle befestigt. Hierbei sind die Hülsendeckel durch Laserschweißen auf der/den Trägerhülse(n) befestigt. Ferner besteht die Welle aus einer Aluminiumoxidkeramik.

Der Magnet ist außen von einem zylindrischen Mantel bedeckt, der mit seinen Enden an den Hülsendeckeln angeschweißt ist. Ferner bestehen die Hülsendeckel und/oder der Mantel vorteilhafterweise aus rostfreiem Stahl.

Ein Verfahren zum Herstellen des Rotors besteht darin, dass auf die Keramikwelle eine oder zwei Trägerhülsen aufgeschoben und durch Löten insbesondere Hochtemperatur-Vakuumlöten befestigt werden. Danach werden der Magnet und die Hülsendeckel auf die Keramikwelle aufgeschoben und dann werden die Hülsendeckel auf die Trägerhülse(n) aufgeschweißt. Hierbei kann/können die Trägerhülse(n) vor dem Aufschieben durch Erwärmung aufgedehnt und im erwärmten Zustand auf die Keramikwelle aufgeschoben werden, wobei danach die Trägerhülsen anschließend belotet werden. Im Vakuumofen wird das Lot fließfähig und dringt in die Lötspalte ein, wobei es danach durch Abkühlung erstarrt. Die Trägerhülse kann als lange Hülse (einteilig) oder als kurze Hülse (zweiteilig) zur Anwendung kommen.

Vorzugsweise wird vorgeschlagen, dass die Trägerhülse(n) vor dem Aufschieben auf die Keramikwelle in einem Ultraschallbad gereinigt werden.

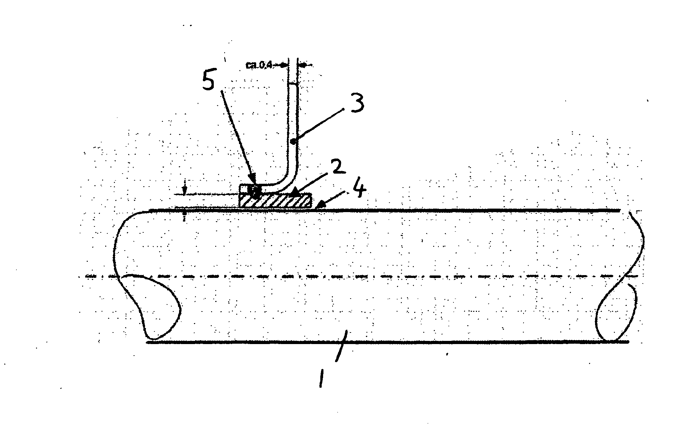

Ein Ausführungsbeispiel der Erfindung ist in der Zeichnung in einem axialen Schnitt im Ausschnitt dargestellt und wird im Folgenden näher beschrieben.

Die Rotorwelle 1 eines Synchronmotors besteht aus einer Aluminiumoxidkeramik (Al₂O₃) mit einer zylindrischen Außenfläche, auf der zwei koaxiale Trägerhülsen 2 aufgeschoben sind, die miteinander einen Abstand bilden. In der Abbildung ist nur eine der beiden Trägerhülsen dargestellt.

Beide Trägerhülsen 2 sind durch Hochtemperatur-Vakuumlöten auf der Keramikwelle 1 befestigt. Auf beiden Trägerhülsen ist außen jeweils ein ringförmiger Hülsendeckel 3 durch einen Laser angeschweißt, die jeweils flanschförmig von der Welle vorstehen und zwischen sich den nicht dargestellten Permanentmagneten aufnehmen. Statt zweier axial kurzer Hülsen 2 ist in einer Alternative eine einzige (einteilige) lange Hülse auf der Rotorwelle 1 durch Hochtemperatur-Vakuumlöten befestigt, wobei auf beiden Enden der langen Hülse jeweils ein Hülsendeckel 3 durch Laser aufgeschweißt ist.

Beide Hülsendeckel 3 bestehen aus einem Edelstahlblech von 0,3 bis 0,5 vorzugsweise von 0,4 mm Stärke und sind innenseitig zu einem buchsenförmigen Bereich 5 umgebogen bzw. verformt, der den Schweißbereich mit der Trägerhülse 2 bildet.

Der Magnet ist außen von einem zylindrischen Mantel bedeckt, der mit seinen Enden an den Hülsendeckeln 3 angeschweißt ist. Hülsendeckel 3 und/oder Mantel bestehen aus rostfreiem Stahl.

Das Verfahren zur Herstellung des Rotors weist folgende Arbeitsschritte auf: Auf der Keramikwelle 1 werden eine lange oder zwei kurze Trägerhülsen 2 aufgeschoben und durch Löten insbesondere Hochtemperatur-Vakuumlöten befestigt. Vor dem Aufschieben werden die Trägerhülsen 2 durch Erwärmung aufgedehnt und im erwärmten Zustand auf die Keramikwelle 1 aufgeschoben. Hierbei ist es wichtig, dass die Trägerhülsen zum Löten metallisch blank sind, so dass die Trägerhülse(n) 2 vor dem Aufschieben auf die Keramikwelle 1 in einem Ultraschallbad gereinigt werden.

Danach werden die erwärmten Trägerhülsen 2 belotet, wobei das Lot im Ofen in die Fügespalte(n) 4 eindringt. Danach erstarrt das Lot durch Abkühlen. Danach werden der Magnet und die Hülsendeckel 3 auf die Keramikwelle 1 aufgeschoben und die Hülsendeckel werden auf die Trägerhülse(n) 2 durch Laser aufgeschweißt.

## Patentansprüche

1. Rotor eines Synchronmotors mit einem auf einer Keramikwelle (1) zwischen zwei ringförmigen Hülsendeckeln (3) befestigtem Permanentmagnet, **dadurch gekennzeichnet, dass** auf der Keramikwelle (1) mindestens eine koaxiale Trägerhülse (2) aufliegt, die mit ihrer Innenfläche auf der Außenseite der Keramikwelle angelötet ist, und dass auf der Außenfläche der Trägerhülse(n) die Hülsendeckel (3) aufgeschweißt sind.

2. Rotor nach Anspruch 1 **dadurch gekennzeichnet, dass** die Trägerhülse(n) (2) durch Hochtemperatur-Vakuumlöten auf der Keramikwelle (1) befestigt ist/sind.

3. Rotor nach Anspruch 1 oder 2, **dadurch gekennzeichnet, dass** die Hülsendeckel (3) durch Laserschweißen auf der/den Trägerhülse(n) (2) befestigt sind.

4. Rotor nach einem der vorherigen Ansprüche, **dadurch gekennzeichnet, dass** die Welle (1) aus einer Aluminiumoxidkeramik besteht.

5. Rotor nach einem der vorherigen Ansprüche, **dadurch gekennzeichnet, dass** der Magnet außen von einem zylindrischen Mantel bedeckt ist, der mit seinen Enden an den Hülsendeckeln (3) angeschweißt ist.

6. Rotor nach einem der vorherigen Ansprüche, **dadurch gekennzeichnet, dass** die Hülsendeckel (3) und/oder der Mantel aus rostfreiem Stahl bestehen.

7. Verfahren zur Herstellung eines Rotors nach einem der vorherigen Ansprüche, **dadurch gekennzeichnet,**
- **dass** auf die Keramikwelle (1) eine oder zwei Trägerhülsen (2) aufgeschoben und durch Löten insbesondere Hochtemperatur-Vakuumlöten befestigt werden,
- **dass** danach der Magnet und die Hülsendeckel (3) auf die Keramikwelle aufgeschoben werden,
- und **dass** dann die Hülsendeckel auf die Trägerhülse(n) aufgeschweißt werden.

8. Verfahren nach Anspruch 7, **dadurch gekennzeichnet,**
- **dass** die Trägerhülse(n) (2) vor dem Aufschieben durch Erwärmung aufgedehnt und im erwärmten Zustand auf die Keramikwelle (1) aufgeschoben wird/werden,
- **dass** danach die erwärmten Trägerhülsen belotet werden und das Lot in dem/die Fügespalte(n) (4) eindringt,
- und **dass** dann das Lot durch Abkühlen erstarrt.

9. Verfahren nach Anspruch 7 oder 8, **dadurch gekennzeichnet, dass** die Trägerhülse(n) (2) vor dem Aufschieben auf die Keramikwelle (1) in einem Ultraschallbad gereinigt werden.
